(19) **Europäisches Patentamt**
**European Patent Office**
**Office européen des brevets**

(11) **EP 1 497 114 B1**

(12) **EUROPÄISCHE PATENTSCHRIFT**

(45) Veröffentlichungstag und Bekanntmachung des Hinweises auf die Patenterteilung:
**14.05.2008 Patentblatt 2008/20**

(21) Anmeldenummer: **02743168.3**

(22) Anmeldetag: **10.06.2002**

(51) Int Cl.:
***B32B 7/02*** *(2006.01)*    ***E04B 1/82*** *(2006.01)*
***E04F 15/02*** *(2006.01)*

(86) Internationale Anmeldenummer:
**PCT/EP2002/006296**

(87) Internationale Veröffentlichungsnummer:
**WO 2003/000489 (03.01.2003 Gazette 2003/01)**

(54) **GASGEFÜLLTE NOPPENMATTE FÜR DEN EINSATZ IM HOCH-, TIEF- UND GRUNDBAU**

GAS-FILLED BUBBLE SHEETS FOR APPLICATION IN CIVIL ENGINEERING

PANNEAU COMPARTIMENTE REMPLI D'AIR DESTINE A ETRE UTILISE EN CONSTRUCTION IMMOBILIERE, CONSTRUCTION SOUTERRAINE ET CONSTRUCTION DE FONDATIONS

(84) Benannte Vertragsstaaten:
**AT BE CH CY DE DK ES FI FR GB GR IE IT LI LU MC NL PT SE TR**

(30) Priorität: **15.06.2001 DE 20109885 U**

(43) Veröffentlichungstag der Anmeldung:
**19.01.2005 Patentblatt 2005/03**

(73) Patentinhaber: **QUADRUPLE-M Elsässer GmbH 6020 Innsbruck (AT)**

(72) Erfinder: **Elsässer, Manfred 6082 Patsch (AT)**

(74) Vertreter: **Bogensberger, Burkhard Bogensberger Patent- und Markenbüro, Austrasse 79 9490 Vaduz (LI)**

(56) Entgegenhaltungen:
EP-A- 0 698 482    WO-A-97/19811
DE-A- 2 030 006    US-A- 3 616 155
US-A- 4 803 112

**Beschreibung**

Die Erfindung betrifft eine gasgefüllte Noppenmatte für den Einsatz im Hoch-, Tief- und Grundbau nach dem Oberbegriff des Anspruchs 1 und eine Verwendung einer gasgefüllten Noppenmatte mit Barrierewerkstoffen zur Trittschalldämmung im Hoch-, Tief- und Grundbau.

Die Verwendung von Luftnoppenfolien oder Noppenmatten ist allgemein für Polster- und Verpackungszwecke bekannt. Dabei werden an diese Materialien keine hohen Anforderungen an Belastbarkeit, insbesondere bei lokaler, punktueller Einwirkung, und Lebensdauer gestellt. Die zur Herstellung verwendeten Folien bestehen dementsprechend meist aus Werkstoffen geringer Diffusionsdichte - wie z.B. Low Density (LD)-Polyethylen.

Dagegen finden Noppenmatten im Baubereich bisher nur eingeschränkte Anwendungsbereiche.

Hinsichtlich der Dämpfung oder Dämmung akustischer Grössen ist aus der Bauphysik bekannt, dass sich im Bauwesen ausreichender Trittschallschutz von Trennbauteilen bei gleichzeitig realistischen Bauteilmassen nur durch mehrschalige - in der Regel zweischalige - Bauteile oder durch die Kombination schwerer einschaliger Trenndecken mit weichfedernden Gehbelägen erreichen lassen. Zweischalige Trenndecken sind im allgemeinen in Form von schwimmenden Estrichen ausgeführt und bedingen daher in der Regel relativ grosse Konstruktionshöhen, die insbesondere in der Altbausanierung mit meist vorgegebenen Anschlusshöhen praktisch kaum realisierbar sind. Bei der Berechnung des für den Mindest-Trittschallschutz des Gesamtaufbaus erforderlichen Trittschall-Verbesserungsmasses $VM_{erf}$ mehrschichtiger Deckenauflagen dürfen weichfedernde Gehbeläge nicht in allen europäischen Ländern herangezogen werden. Sie sind ausserdem teilweise für den Einsatz insbesondere in Nassbereichen (Bädern) ungeeignet oder nicht akzeptabel.

In letzter Zeit kommen hingegen immer mehr relativ dünne, steife Bodenbeläge und Wandverkleidungen zum Einsatz, z.B. aus Holz- bzw. Press-Spanplatten in Dielenformaten mit extrem harten Oberflächen, z.B. auch aus Kunststoff-Laminaten. Das Verhalten dieser - einschalig wirkenden - Boden- bzw. Wandbeläge ist - in besonderem Masse hinsichtlich der Trittschallabstrahlung in den begangenen Raum selbst - kritisch und subjektiv unangenehm.

In Deutschland und Österreich sind schwimmende Estriche trittschallschutztechnische Standardausführungen. Bodenbeläge dürfen allerdings wegen deren Alterung und der Möglichkeit der Austauschbarkeit für den schalltechnischen Nachweis des Mindest-Trittschallschutzes nicht herangezogen werden. Die Resonanzfrequenz weichfedernder Gehbeläge sinkt mit steigender Berührungszeit; diese ist wiederum abhängig von der Eindringtiefe des anregenden Gegenstandes in die Belagsschicht, und diese wiederum ist natürlich von den Abmessungen und der Masse des Trittschallerregers abhängig. Dieser Zusammenhang ist auch die Ursache dafür, dass Messergebnisse bezüglich der Pegelminderungen durch Gehbeläge mittels des Normhammerwerkes und beim Begehen desselben Trenndeckenaufbaus grundsätzlich voneinander abweichen.

Dünne steife Gehbeläge werden in der Baupraxis, wenn sie eine ausreichende Lastverteilung gewährleisten, auch schwimmend verlegt und könnten damit grundsätzlich eine Zwischenlösung aus einem schwimmenden Estrich und einem weichfedernden Gehbelag darstellen. Die Nachteile solcher Gehbeläge im Hinblick auf den Trittschallschutz liegen derzeit allerdings meist noch darin, dass

- einerseits im allgemeinen die Masse der lastverteilenden Schicht relativ klein ist und damit zur Erzielung eines akzeptablen Trittschallverbesserungsmasses des zweischaligen Aufbaus die dynamische Steifigkeit der Zwischenschicht deutlich kleiner als 10 MN/ m$^3$ sein muss, was mit herkömmlichen Trittschalldämmstoffen nur in Verbindung mit eher grossen Schichtdicken zu erzielen ist, welche wiederum grosse Konstruktionshöhen zur Folge haben;

- andererseits das Trittschallverhalten des steifen einschaligen Gehbelages selbst aufgrund der zusätzlich meist sehr harten Oberflächenschicht, der damit verbundenen geringen Eindringtiefe des Trittschallerregers (kurze Berührungszeiten) und der daraus resultierenden ungünstigen Resonanzfrequenz - schon subjektiv feststellbar - äusserst unbefriedigend ist. Dies macht sich oft auch durch unangenehme Gehgeräusche ("Klappern") im begangenen Raum bemerkbar.

Luftnoppenfolien, z.B. aus Polyethylen, mit zylindrischen Luftnoppen zur Wärmeisolierung von Gebäudekomponenten sind aus der Patentschrift JP 110043803 bekannt.

Luftnoppenfolien für den Trittschallschutz unter schwimmenden Estrichen sind z.B. aus der DE 2 841 208 oder der CH 645968 bekannt; raumakustisch oder luftschallschutztechnisch bieten diese Vorschläge aber keine adäquate Lösung. Ausserdem besitzen Luftnoppenfolien des Standes der Technik für Verwendungen im Baubereich nur eine unbefriedigende Widerstandsfähigkeit gegen punktuelle Belastungen und eine eingeschränkte Haltbarkeit aufgrund des Verlustes der Gasfüllung.

Luftkissenfolien mit verbesserter Belastbarkeit und ein verfahren zu deren Herstellung sind aus der Patentanmeldung DE 4114 506 bekannt.

Die mit Gas bzw. Luft gefüllten Noppen solcher Schalldämmschichten sind für den Einsatz im Bauwesen - im Unterschied zu herkömmlichen, z.B. aus der Verpackungsindustrie oder für den Einsatz im Bereich von Schuheinlagsohlen aus der US 5,584,130 oder US 6,127,026 bekannt gewordenen Luftnoppenfolien und deren Materialien - in ihrem Durchmesser, ihrer Höhe und ihrem Abstand zueinander gezielt so abgestimmt, dass die Kombination aus der Gerüststeifigkeit der verwendeten Kunststoff-Folie, der dynamischen Steifigkeit des in den Noppen eingeschlossenen Gases (Luft), und schliesslich auch der sich im eingebauten Zustand zwischen den Noppen befindlichen Luft, eine dynamische Steifigkeit kleiner als 20, vorzugsweise <10 MN/m$^3$ ergibt. Dies kann entweder bereits mittels einer einlagigen Noppenfolie oder aber auch durch die Kombination von zwei oder mehreren Noppenfolien erzielt werden.

Im Unterschied zu an sich bereits aus der Verpackungsindustrie bekannten Luftnoppenfolien aus Polyethylen müssen die bautechnisch, insbesondere im Hochbau, verwendbaren Noppenmatten einige weitere spezifische Eigenschaften hinsichtlich des Schall-, Wärme- und Feuchtigkeitsschutzes aufweisen.

Neben der Kenngrösse dynamische Steifigkeit s' spielt im praktischen Einsatz von Trittschallschutz-Noppenfolien im Bauwesen selbstverständlich auch deren Standfestigkeit eine entscheidende Rolle. Hiefür ist die Dicke der verwendeten Kunststoff-Folien selbst entsprechend so zu wählen, dass der Füllgrad der Noppen über den relevanten Zeitraum hinweg ausreichend konstant und die Belastbarkeit der Noppenfolie im eingebauten Zustand ausreichend gross und stabil bleibt.

Der zu erzielende Wärmeschutz dünner Trittschall-Noppenfolien kann durch eine Kaschierung mit Deckschichten verbessert werden, wenn deren den Noppen zugewandte Oberfläche einen niedrigen relativen Emissionskoeffizi-enten $\varepsilon_r$ (möglichst kleiner 0,1) aufweist. Damit kann nämlich der durch Wärmestrahlung bedingte Anteil der allgemein auch noch durch Konvektion und Wärmeleitung verursachten Gesamt-Wärmeübertragung über die zwischen den Noppen stehende Luftschicht minimiert werden.

Der Erfindung liegt die Aufgabe zugrunde, eine auch im Baubereich und hier insbesondere für Bodenbeläge verwendbare Noppenmatte bereitzustellen, die den besonderen Erfordernissen an Haltbarkeit und Belastbarkeit genügt.

Eine weitere Aufgabe besteht darin, eine Noppenmatte bereitzustellen, die beispielsweise als Komponente eines Schallschutzsystems sowohl eine Trittschalldämmung als auch eine verminderte Abstrahlung bewirkt.

Diese Aufgaben werden erfindungsgemäss durch die kennzeichnenden Merkmale des Anspruchs 1 gelöst. Vorteilhafte und alternative Ausgestaltungen und Weiterbildungen ergeben sich aus den Merkmalen der Unteransprüche.

Der gegenständlichen Erfindung liegt der Gedanke zugrunde, dass Noppenfolien/ -matten mit Barrierema-rialien, vorzugsweise auf der Basis von mechanisch tiefgezogenen CoexBlasfolien, bei einer speziellen Auswahl und (eventuell symmetrischen) Anordnung der einzelnen Schichten nicht nur wie bisher überwiegend in der Verpackungsindustrie eingesetzt werden können, sondern auch in eine Reihe von technischen Anwendungen, bei denen derzeit noch ausschliesslich glatte Folienbahnen verwendet werden, Eingang finden sollen.

Voraussetzung dafür ist allerdings, dass die neue Noppenmatte gegenüber dem vorangehend beschriebenen Stand der Technik für Luftnoppenfolien tatsächlich

- eine wesentlich verbesserte mechanische Kurzzeit-Belastbarkeit (Dichtheit der - vorzugsweise mit einem Inertgas gefüllten - Noppen auch bei hohen Drücken), aber auch Langzeit-Standfestigkeit (niedriger Permeabilitätswert speziell für das Füllgas) aufweist, trotzdem dicht verschweissbar ist und damit

- wärme-, schall- und feuchtigkeitsschutztechnische Kennwerte ergibt, die auch den kombinierten Einsatz im Hoch- und Tiefbau bei gleichzeitig kleinen Konstruktionshöhen erschliesst.

Ein geeignetes Verfahren zur Produktion einer erfindungsgemässen Noppenmatte ist aus den Patentanmeldungen AT 14/A 1034/89, DE 4114 596 und EP 0779 137 bekannt. Dort werden Luftkissenfolien und Verfahren zu ihrer Herstellung beschrieben, die aufgrund des Einsatzes von Folienbahnen aus Niederdruck-High-Density-Polyethylen (HDPE mit 0,94 - 0,96 g/cm$^3$) Polypropylen, Polyamid oder Polyester hoher Dichte und einer Dicke unter 15 $\mu$m, insbesondere von Mono- bzw. Coexblasfolien mit gleicher Festigkeit und Dehnung in Längs- und Querrichtung, gegenüber diesen aus der Verpackungsindustrie bekannten Luftpolsterfolien geringer Dichtigkeit, eine zweieinhalb mal und bis zu vierfach höhere mechanische Festigkeit aufweisen.

Jede Folienbahn kann aus einer Vielzahl, z.B. bis zu neun koextrudierten Schichten gebildet sein, so dass die Luftkissenfolie je nach Zusammensetzung der Schichten an vielfältige Einsatzzwecke angepasst werden kann. So können beispielsweise eingefärbte, UV-stabilisierte, antistatische, diffusionshemmende oder besonders siegelfeste Schichten zum Einsatz kommen. Zur Erzielung hoher Dichtheit der Luftkissenfolien hat es sich als besonders vorteilhaft erwiesen, wenn es sich bei dem Barrierewerkstoff um ein Ethylen-Vinylalkohol-Kopolymerisat (EVOH) handelt, da in diesem Fall die Permeabilität für gasförmige Stoffe und mithin die Gefahr der Diffusion um etwa 90 % reduziert wird.

Weitere Folien aus extrudierten Mikroschichten mit Barrierewerkstoffen sind aus der Anmeldung WO 00/76765 bekannt.

Die oben beschriebenen Anforderungen können beispielsweise durch im "offline-Verfahren" produzierte Noppenfolien (bisher bekannte Luftnoppenfolien werden alle "inline" mit Vakuum tiefgezogen) mit folgendem Schichtaufbau erfüllt werden:

1. eine mechanisch tiefgezogene 7-schichtige Coex-Blasfolie als Unterfolie mit einer Gesamtdicke von mindestens 28 μm bestehend aus

Polypropylen oder Polyethylen - Haftvermittler - Polyamid - 9 μm Ethylen-Vinylalkohol-Kopolymerisat oder 9 μm Polyvinylidenchlorid - Polyamid- Haftvermittler - Polypropylen in Kurzform mit gängigen Abkürzungen

```
PP (bzw. PE) + HV + PA + 9 μm EVOH + PA + HV + PE,
```

oder

```
PP (bzw. PE)+ HV + PA + 9 μm PVDC + PA + HV + PE,
```

2. eine "Deckfolienbahn" zur Stabilisierung der tiefgezogenen Noppen aus
12 μm Polyethylen-Terephtalat (PET) metallisiert (optische Dichte OD 2,5 bis 3,1) + Polyurethan (PU)-Kleber + 14 μm 2-Schichtcoexblasfolie,
wobei diese zur besseren Verbindung in jedem Fall eine dünne Auflage aus einem einen tieferen Schmelzpunkt aufweisenden Hochdruckpolyethylen oder einem Copolymer geringerer Dichte aufweist, und

3. einer Inertgasfüllung aus möglichst grossatomigen Edelgasen mit einer Wärmeleitfähigkeit kleiner als 0,12 W/mK, wie z.B. Argon oder Krypton, für welche die Permeabilität der Folienmaterialien höchstens 3 cm$^3$/m$^2$*atm*24h (also pro Tag) beträgt.

Für die 2-Schichtcoexblasfolie der Deckfolienbahn kann vorzugsweise High-Density-Polyethylen (HDPE) und entweder Linear-Low-Density-Polyethylen (LLDPE) oder Very-Low-Density-Polyethylen (VDPE) Verwendung finden. Sowohl in der Unterfolie als auch in der Deckfolienbahn können weitere Barrierewerkstoffe zur Verringerung der Permeabilität eingebracht werden.

Anstelle der Deckschicht der Luftnoppen aus Polypropylen kann zur leichteren thermischen Verklebung (Kaschierung) der Noppenmatte wiederum eine Polyethylenfolienbahn (so wie auf der Blasfolienunterseite) eingesetzt werden. Die Metallisierung der Polyethylen-Terephtalat-Schicht der "Deckfolienbahn" ist einerseits im Hinblick auf die Absenkung der Permeabilität dieser Schicht auf einen äquivalenten Wert, wie ihn die Noppen selbst in Verbindung mit dem Barrierewerkstoff aufweisen, unverzichtbar. Andererseits kann diese Wärmestrahlung reflektierende Metallschicht - zumindest in Kombination mit für Infrarotstrahlung selektiv noch durchlässigen Deckschichten - den Wärmeschutz der Noppenmatte ebenfalls günstig beeinflussen. Allerdings reduziert die Metallschicht die Verformbarkeit und damit die Verarbeitungsmöglichkeiten der Deckschicht.

Als eine Alternative können auch zwei metallisierte Folien mit ihren Metallflächen verbunden werden.

Die gasgefüllten Noppen weisen damit eine Kurzzeitbelastbarkeit von bis zu 100 kN/m$^2$ (10$^5$ Pa) und eine dynamische Steifigkeit von kleiner oder gleich 20 MN/ m$^3$ sowie einen einachsigen Dehnverlustfaktor von tan δ > 0,1, bevorzugt von tan δ > 0,2 auf. In Verbindung mit Edelgasfüllungen niedriger Wärmeleitzahlen von < 0,12 W/mK (Argon, Krypton, usw.) lassen sich für die Noppenmatte äquivalente Wärmeleitfähigkeiten von ≤ 0,025 W/mK erzielen.

Mit diesen Parametern eignet sich die oben beschriebenen Noppenmatte insbesondere für den Einsatz in Kombination mit Fussbodendielen (Echtholzparkett-, Fournier- und Laminatdielen) und in Verbindung mit auf der Dielenunterseite vorgesehenen elektrischen Flächen-Heizsandwichen und/oder Schalldämpfsystemen.

In Schallschutz-Verbundsystemen werden - im Unterschied zu den aus dem Stand der Technik bekannten, schallschutztechnischen Massnahme in Form einer zusätzlichen Einzelschicht - die beiden an sich bekannten, für das Abstrahlverhalten schallharter Gehbeläge massgeblichen Einflussgrössen innere Schalldämpfung und Trittschallverbesserung durch die funktionelle Aufteilung auf mehrere separate Einzelschichten für den einzelnen Anwendungsfall optimierbar gemacht.

Durch die Kombination einer dünnen, relativ leichten Lastverteilungsplatte mit einer Schall-Bedämpfungsschicht sowie mit einer Luftnoppenfolie als speziell dimensionierter Dämmschicht können die Vorteile zweischaliger Konstruktionen auch für Fussbodenaufbauten mit verhältnismässig geringen Flächenmassen der Einzelschichten erreicht werden. Beispielsweise kann bereits ein dünner, ausreichend steifer Gehbelag selbst die Lastverteilungsfunktion übernehmen.

In einem solchen Schallschutz-Verbundsystem wirkt die erfindungsgemässe Noppenmatte in Verbindung mit den weiteren Komponenten schalltechnisch, also abgesehen von allfälligen wärmeschutz- und dampfdiffusionstechnischen Eigenschaften, in dreierlei Hinsicht, nämlich

a. vorrangig als raumakustische Massnahme zur Verbesserung des Abstrahlverhaltens dünner, steifer und schallharter Gehbeläge in den begangenen Raum selbst zur Vermeidung des für solche Bodenbeläge typischen, subjektiv äusserst unangenehmen Klapperns im oberen, bauakustisch relevanten Frequenzbereich,

b. als trittschallmindernde Massnahme zur Erzielung eines akzeptablen Trittschall-Verbesserungsmasses auch mit schallharten Gehbelägen (als Variante zu den hierfür in der Praxis meist verwendeten weichfedernden Gehbelägen),

c. zusätzlich auch als luftschallschutztechnisch wirksame Massnahme.

Anwendungsbereiche für die erfindungsgemässe Noppenmatte finden sich insbesondere

1. im Hochbau sowohl als Trittschalldämmfolie als auch als belastbare Wärmedämmschicht in Verbindung mit einer elektrischen Fussboden-Flächenheizung unter Fussbodendielen,

2. im Grund- und Tiefbau als "reibungsmindernde" Einlage unter z. B. massiven Beton-Bodenplatten, sowie als zusätzlich verschweissbare Dichtungsbahn im Tunnelbau.

Die erfindungsgemässe Noppenmatte wird nachfolgend anhand von in der Zeichnung schematisch dargestellten Ausführungsbeispielen rein beispielhaft näher beschrieben. Im einzelnen zeigen

Fig.1   schematische Darstellungen der Schichten von zwei Folienbahnen zur Herstellung einer erfindungsgemässen Noppenmatte;

Fig.2   eine schematische Darstellung der Verbindung von zwei Folienbahnen zur Erzeugung einer einzelnen Noppe einer erfindungsgemässen Noppenmatte im Seitenriss und

Fig.3   eine schematische Darstellung der Schichten einer einzelnen Noppe einer erfindungsgemässen Noppenmatte im Seitenriss.

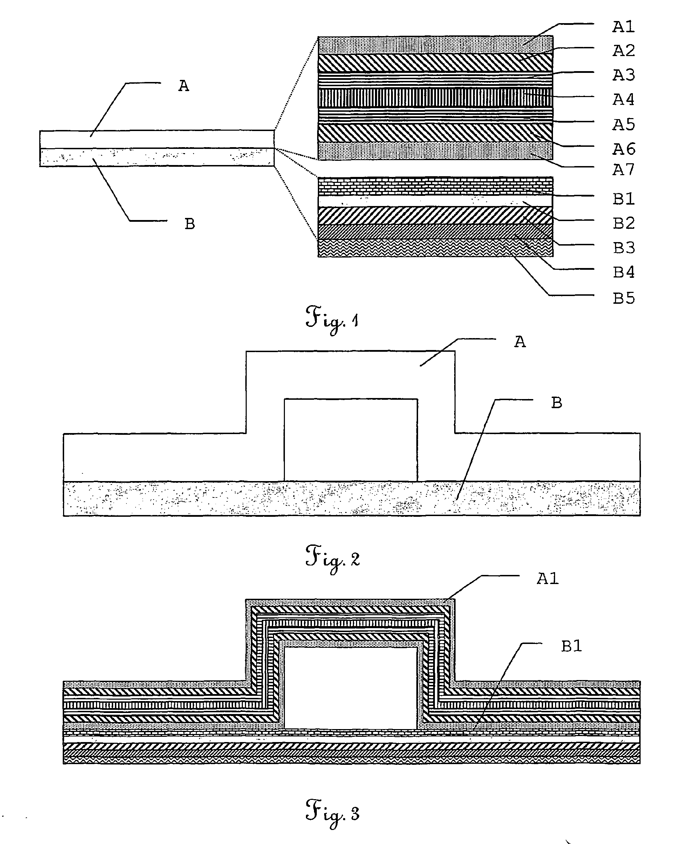

In Fig. 1 wird rein beispielhaft der Aufbau einer Folie zur Herstellung einer erfindungsgemässen Noppenmatte dargestellt. Die Folie besteht aus einer ersten Folienbahn A und einer zweiten Folienbahn als Deckfolienbahn B. Die erste Folienbahn A ist symmetrisch aus den 7 Schichten Polyethylen A1, Haftvermittler A2, Polyamid A3, Ethylen-Vinylalköhol-Kopolymerisat A4, Polyamid A5, Haftvermittler A6 und Polyethylen A7 aufgebaut. Alternativ können die Schichten A1 und/oder A7 auch aus Polypropylen, bzw. kann die Schicht A4 aus Polyvinylidenchlorid bestehen.
Die Deckfolienbahn B besteht aus einer Schicht Polyethylen-Terephtalat B1, einer Metallisierungsschicht B2, einer Schicht aus Polyurethan-Kleber B3 und Schichten aus koextrudierter Blasfolie B4 und B5. Die Schicht B4 kann zur Erzielung der notwendigen Festigkeit der gesamten Folienbahn beispielsweise aus High-Density-Polyethylen, die Schicht B5 zur Erzielung einer guten, bzw. leichteren Verschweissbarkeit aus Linear-Low-Density-Polyethylen oder Very-Low-Density-Polyethylen gefertigt werden.
Die Fig.2 stellt die Verbindung einer tiefziehbaren und zu einer Noppen ausgeformten ersten Folienbahn A und einer Deckfolienbahn B dar. Beide Folienbahnen sind miteinander verbunden und bilden gasdichte Noppen C, die während der Herstellung mit einem Inertgas, z.B. Argon befüllt werden können.
Fig.3 zeigt schematisch die Abfolge der Schichten im Bereich einer Noppe, die durch eine tiefziehbare erste Folienbahn A und eine abschliessende Deckfolienbahn B gebildet wird. Zur Verdeutlichung der Orientierung der Schichten werden die Schichten Polyethylen A1 und Polyethylen-Terephtalat B1 bezeichnet.
Die Zeichnungen sind rein schematisch zur Darstellung und Verdeutlichung eines erfindungsgemässen Schichtaufbaus der Folienbahnen gestaltet. Insbesondere können aus den dargestellten Dimensionen und Grössenverhältnisse keine Aussagen über tatsächliche Relationen abgeleitet werden.

**Patentansprüche**

**1.**   Gasgefüllte, für Bodenbeläge verwendbare, trittschalldämmende Noppenmatte aus mindestens zwei miteinander verbundenen Folienbahnen, die mindestens einen Barrierewerkstoff enthalten, und von denen mindestens eine aus mehreren, vorzugsweise biaxial gereckten, Schichten besteht, **dadurch gekennzeichnet, dass** eine erste, tiefziehfähige Folienbahn als Unterbahn wenigstens 5 Schichten besitzt, wobei

der Barrierewerkstoff, vorzugsweise Ethylen-Vinylalkohol-Kopolymerisat (EVOH), Polyvinylidenchlorid (PVDC) oder Polyethylen-Terephtalat (PET),

zwischen zwei Schichten aus haftverbesserndem und/oder lastverteilendem Werkstoff, wie z.B. Polyamid (PA) und/oder einem Haftvermittler, eingebettet ist

und die äusseren Schichten der Folienbahn aus einem verschweissbaren Werkstoff, vorzugsweise Polypropylen (PP) oder Polyethylen (PE) bestehen.

2. Noppenmatte nach Anspruch 1, **dadurch gekennzeichnet, dass** wenigstens eine der Schichten, vorzugsweise diejenige aus PolyethylenTerephthalat (PET) oder Polypropylen (PP), eine Metallbeschichtung trägt.

3. Noppenmatte nach einem der vorangehenden Ansprüche, **dadurch gekennzeichnet, dass** die Schicht aus Barrierewerkstoff eine Dicke von mindestens 4 $\mu$m, vorzugsweise etwa 9 - 20 $\mu$m, besitzt.

4. Noppenmatte nach einem der vorangehenden Ansprüche, **dadurch gekennzeichnet, dass** die haftverbessernden und/oder lastverteilenden Schichten eine Dicke von jeweils mindestens 2 $\mu$m, vorzugsweise etwa 10 $\mu$m, besitzen.

5. Noppenmatte nach einem der vorangehenden Ansprüche, **dadurch gekennzeichnet, dass** die äusseren Schichten aus verschweissbarem Werkstoff zusammen mit der jeweiligen Haftvermittler-Schicht eine Dicke von jeweils mindestens 10 $\mu$m, vorzugsweise etwa 15 - 30 $\mu$m, besitzen.

6. Noppenmatte nach einem der vorangehenden Ansprüche, **dadurch gekennzeichnet, dass** eine zweite Folienbahn als Deckfolienbahn Schichten folgender Abfolge aufweist:

   - Polyethylen-Terephtalat (PET) oder Polypropylen (PP),
   - Metallisierung,
   - Polyurethan-Kleber,
   - eine mindestens 2-, vorzugsweise 5 - 7-schichtige koextrudierte Folie, insbesondere enthaltend je eine Schicht aus High-Density-Polyethylen (HDPE) und entweder Linear-Low-Density-Polyethylen (LLDPE) oder Very-Low-Density-Polyethylen (VDPE).

7. Noppenmatte nach einem der vorangehenden Ansprüche, **dadurch gekennzeichnet, dass** wenigstens eine Folienbahn einen weiteren Barrierewerkstoff enthält.

8. Noppenmatte nach einem der vorangehenden Ansprüche, **dadurch gekennzeichnet, dass** die erste Folienbahn eine Gesamtdicke von 28-120 $\mu$m, vorzugsweise etwa 40 - 80 $\mu$m besitzt, und in der zweiten Folienbahn die metallisierte PET-Schicht oder PP-Schicht eine Dicke von 10-20 $\mu$m, vorzugsweise etwa 12 $\mu$m, und die 2 - 7 Schichten aus koextrudierter Folie eine Gesamtdicke von 10-50 $\mu$m, vorzugsweise etwa 20 - 40 $\mu$m, besitzen.

9. Noppenmatte nach einem der Ansprüche 6 bis 8, **dadurch gekennzeichnet, dass** die metallisierte PET-Schicht bzw. PP-Schicht in der zweiten Folienbahn eine optische Dichte von 2,5 bis 3,1 besitzt.

10. Noppenmatte nach einem der vorangehenden Ansprüche, **dadurch gekennzeichnet, dass** die Noppen mit einem inertgas, vorzugsweise Argon, oder mit einem Inertgas-Gemisch gefüllt sind.

11. Verwendung einer gasgefüllten Noppenmatte nach einem der Ansprüche 1 bis 10, zur Trittschalldämmung und/oder als wärmedämmende Schicht im Hoch-, Tief- und Grundbau.

**Claims**

1. Gas-filled bubble sheet which can be used in building construction, civil engineering and foundation construction as a heat insulation layer, as a measure for room acoustics or footfall sound reduction or effective in airborne sound insulation, as a friction-reducing liner or as a weldable sealing sheet, comprising at least two film webs which are bonded to one another and contain at least one barrier material and at least one of which consists of a plurality of preferably biaxially stretched layers, **characterized in that** a first, thermoformable film web, as a lower sheet, has at least 5 layers,

the barrier material, preferably ethylene/vinyl alcohol copolymer (EVOH), polyvinylidene chloride (PVDC) or polyethylene terephthalate (PET),

being embedded between two layers of adhesion-improving and/or load-distributing material, such as, for example, polyamide (PA) and/or an adhesion promoter,
and the outer layers of the film web consisting of a weldable material, preferably polypropylene (PP) or polyethylene (PE).

2. Bubble sheet according to Claim 1, **characterized in that** at least one of the layers, preferably that comprising polyethylene terephthalate (PET) or polypropylene (PP), carries a metal coating.

3. Bubble sheet according to either of the preceding claims, **characterized in that** the layer comprising barrier material has a thickness of at least 4 $\mu$m, preferably about 9 - 20 $\mu$m.

4. Bubble sheet according to any of the preceding claims, **characterized in that** the adhesion-improving and/or load-distributing layers have a thickness of in each case at least 2 $\mu$m, preferably about 10 $\mu$m.

5. Bubble sheet according to any of the preceding claims, **characterized in that** the outer layers comprising weldable material together with the respective adhesion promoter layer have a thickness of in each case at least 10 $\mu$m, preferably about 15 - 30 $\mu$m.

6. Bubble sheet according to any of the preceding claims, **characterized in that** a second film web, as a cover film web, has layers in the following sequence:

   - polyethylene terephthalate (PET) or polypropylene (PP),
   - metallization,
   - polyurethane adhesive,
   - an at least 2-layer, preferably 5 - 7-layer, coextruded film, in particular containing one layer each of high density polyethylene (HDPE) and either linear low density polyethylene (LLDPE) or very low density polyethylene (VDPE).

7. Bubble sheet according to any of the preceding claims, **characterized in that** at least one film web contains a further barrier material.

8. Bubble sheet according to any of the preceding claims, **characterized in that** the first film web has a total thickness of 28 - 120 $\mu$m, preferably about 40 - 80 $\mu$m, and, in the second film web, the metallised PET layer or PP layer has a thickness of 10 - 20 $\mu$m, preferably about 12 $\mu$m, and the 2 - 7 layers of coextruded film have a total thickness of 10 - 50 $\mu$m, preferably about 20 - 40 $\mu$m.

9. Bubble sheet according to any of Claims 6 to 8, **characterized in that** the metallised PET layer or PP layer in the second film web has an optical density of 2.5 to 3.1.

10. Bubble sheet according to any of the preceding claims, **characterized in that** the bubbles are filled with an inert gas, preferably argon, or with an inert gas mixture.

11. Use of a gas-filled bubble sheet according to any of Claims 1 to 10 in building construction, civil engineering and foundation construction, as a measure for room acoustics or footfall sound reduction or effective in airborne sound insulation, as a heat insulation layer, as a friction-reducing liner, for example under solid concrete floor slabs, or as a weldable sealing sheet in tunnel construction.

**Revendications**

1. Panneau à bulles utilisable dans les constructions en hauteur, les constructions souterraines et les fondations, pour réaliser des éléments thermiquement isolants, des éléments acoustiquement isolants capables de diminuer le bruit des pas ou le bruit transmis par l'air, des éléments capables de diminuer la friction ou des éiéments d'étanchéité soudables, lequel panneau est constitué d'au moins deux feuilles adhérant ensemble, contenant au moins une substance barrière et dont au moins une est constituée de plusieurs couches, de préférence, étirées biaxialement, **caractérisé en ce qu'**une première feuille se prêtant facilement à un emboutissage profond servant de feuille inférieure, est constituée d'au moins 5 couches, où :

une substance barrière, de préférence d'un co-polymère éthylène - alcool vinylique (EVOH), d'un chlorure de polyvinylidène (PVDC), ou d'un polyéthylène téréphtalate (PET) est disposée

entre deux couches d'un matériau améliorant l'adhésion et / ou la répartition des sollicitations, comme par exemple un polyamide (PA) et / ou un agent adhésif et où

les deux couches externes de la feuille sont constituées d'un matériau soudable, de préférence, le polypropylène (PP) ou le polyéthylène (PE).

2. Panneau à bulles selon la revendication 1, **caractérisé en ce qu'**au moins une des couches et, de préférence, celle de polyéthylène téréphtalate (PET) ou celle de polypropylène (PE) porte un revêtement métallique.

3. Panneau à bulles selon une des revendications précédentes, **caractérisé en ce que** la couche de matériau barrière a une épaiseur d'au moins 4 $\mu$m et, de préférence, d'environ 9 - 20 $\mu$m.

4. Panneau à bulles selon une des revendications précédentes, **caractérisé en ce que** les couches améliorant l'adhésion et / ou améliorant la répartition des sollicitations ont chacune une épaisseur d'au moins 2 $\mu$m et, de préférence, d'environ 10 $\mu$m.

5. Panneau à bulles selon une des revendications précédentes, **caractérisé en ce que** les couches externes de matériau soudable, combinées avec la couche d'agent adhésif ont une épaisseur d'au moins 10 $\mu$m et, de préférence, d'environ 15 - 30 $\mu$m.

6. Panneau à bulles selon une des revendications précédentes, **caractérisé en ce qu'**une seconde feuille servant de feuille de revêtement est constituée des couches suivantes :

   - une couche de polyéthylène téréphtalate (PET) ou de polypropylène (PP),
   - une couche de métallisation,
   - une couche de colle de polyuréthane,
   - une couche constituée d'au moins 2 et, de préférence, de 5 - 7 couches co-extrudées, comprennant, en particulier, une couche de polyéthylène haute densité (HDPE) et une couche, soit de polyéthylène linéaire basse densité (LLDPE), soit de polyéthylène très basse densité (VDPE).

7. Panneau à bulles selon une des revendications précédentes, **caractérisé en ce qu'**au moins une feuille contient un matériau barrière additionnel.

8. Panneau à bulles selon une des revendications précédentes, **caractérisé en ce que** la première feuille a une épaisseur totale de 28 - 120 $\mu$m et, de préférence, d'environ 40 - 80 $\mu$m, **en ce que** dans la seconde feuille, la couche métallisée de PET ou de PP a une épaisseur de 10 - 20 $\mu$m et, de préférence, d'environ 12 $\mu$m et **en ce que** les 2 - 7 couches co-extrudées de la feuille ont une épaisseur totale de 10 - 50 $\mu$m et, de préférence, d'environ 20 - 40 $\mu$m.

9. Panneau à bulles selon une des revendications 6 à 8, **caractérisé en ce que** la couche métallisée de PET ou de PP dans la seconde feuille a une densité optique de 2,5 à 3,1.

10. Panneau à bulles selon une des revendications précédentes, **caractérisé en ce que** les bulles sont remplies avec un gaz inerte, de préférence l'argon ou avec un mélange de gaz inertes.

11. Utilisation d'un panneau à bulles remplies de gaz selon une des revendications 1 à 10, dans les constructions en hauteur, les constructions souterraines et les fondations, pour réaliser des éléments acoustiquement isolants capables de diminuer le bruit des pas ou le bruit transmis par l'air, des éléments thermiquement isolants, des éléments capables de diminuer la friction, par exemple sous des plaques massives de béton recouvrant le sol ou des éléments d'étanchéité soudables utilisables dans la construction de tunnels.

A1
A2
A3
A4
A5
A6
A7
B1
B2
B3
B4
B5

A

B

Fig. 1

A

B

Fig. 2

A1

B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 110043803 B
- DE 2841208
- CH 645968
- DE 4114506
- US 5584130 A
- US 6127026 A
- DE 4114596
- EP 0779137 A
- WO 0076765 A